# EUROPEAN PATENT APPLICATION

(11) **EP 4 614 267 A1**
(43) Date of publication of application: **10.09.2025**
(21) Application number: 24174206.3
(22) Date of filing: 03.05.2024
(51) Int. Cl.: G05B 23/02, G06Q 10/20

(54) **FRAMEWORK FOR FLIGHT-BY-FLIGHT SEVERITY PREDICTION FOR AIRCRAFT COMPONENTS**

(30) Priority: 08.03.2024 PL 44796624; 30.04.2024 US 202418650947
(71) Applicant: General Electric Company, Schenectady, NY 12345 (US); General Electric Company Polska Sp. Z o.o, 02-256 Warszawa (PL)
(72) Inventor: AKKARAM, Srikanth, West Chester, 45069 (US); ORACZ, Dariusz Robert, 02-256 Warsaw (PL); DZIUGIEL, Tomasz, 05-300 Minsk Mazowiecki (PL); KONWAR, Rajkumar Singha, 560066 Bengaluru (IN)
(74) Representative: Openshaw & Co.

(57) **Abstract**

There are provided systems and methods for prognostic analytics of an asset. For example, there is provided a processor-implemented method for severity prediction for aircraft components. The method includes accessing time series flight-by-flight data relating to a component of an aircraft, the time series flight-by-flight data comprising performance data; determining, by a prediction model, an estimated degree of distress for the component based on the time series flight-by-flight data; determining a flight-by-flight severity prediction for the component based on the estimated degree of distress; and providing a preemptive recommendation for the component based on determined the flight-by-flight severity prediction.

## Description

### TECHNICAL FIELD

The present disclosure relates to severity prediction for aircraft components. Particularly, the present disclosure relates to a system and a method for a physics-inspired neural network-based framework for flight-by-flight severity prediction for aircraft components.

### BACKGROUND

Many enterprise applications make use of reliability monitoring systems to forecast part longevity based on usage; as such, managers are able to schedule maintenance or even the decommissioning of parts as well as their replacement. In typical reliability monitoring systems, this forecasting is often performed utilizing fleet-based performance data as well as fleet-based statistical models. In other words, these typical systems require data for a large number of assets to provide predictive work-scoping information based on the collective statistical parameters estimated from these data.

Furthermore, while in some industries, a focus is placed on identifying parts that need servicing in order to maximize supplier profits through service contracts, in other industries, the focus is to extend the lifetime of an asset in the field by performing preventative part replacement. The latter paradigm is prevalent, for instance, in military applications where the focus is to maintain operational readiness. For example, the logistical constraint for military jet engines is to extend engine operational lifetimes while minimizing downtime. As such, parts are replaced early in order to ensure readiness. As a result, parts may be replaced early, leading to sub-optimal usage of the full-life capability of the part.

Typical monitoring systems do not perform well when optimizing these constraints for an individual part because they operate based on fleet-wide statistics, which may be inadequate when considering an individual component in an engine. As such, for military applications or for any other enterprise application where reliability requirements on single components are included for achieving operational objectives, there is a need for reliability monitoring systems that provide predictive and preemptive work-scoping information at the single engine component level.

### BRIEF DESCRIPTION OF THE DRAWINGS

A better understanding of the features and advantages of the disclosed technology will be obtained by reference to the following detailed description that sets forth illustrative aspects, in which the principles of the technology are utilized, and the accompanying drawings of which:
FIG. 1 illustrates a system for flight-by-flight severity prediction for aircraft components, according to an exemplary aspect;
FIG. 2 is a block diagram of a controller of the system of FIG. 1, in accordance with one aspect;
FIG. 3 is a block diagram of a flight-by-flight severity model for estimating component distress based on progressive states of distress in accordance with one aspect;
FIG. 4 is a block diagram of a prediction model for estimating Flight by Flight Severity for a component based on the end state of distress in accordance with one aspect;
FIG. 5 is a block diagram of a prediction model for estimating flight-by-flight severity for engine deterioration based on a severity adjusted sawtooth model for engine deterioration in accordance with one aspect;
FIG. 6 is a graph illustrating takeoff exhaust gas temperature (EGT) vs. flight-by-flight severity in accordance with one aspect;
FIG. 7 is a graph illustrating how flight-by-flight severity is a function of both TKOFF and Climb EGT in accordance with one aspect;
FIG. 8 is a graph illustrating the number of cycles vs. unreliability (%) for flight-by-flight adjusted Weibull distributions in accordance with one aspect; and
FIG. 9 is a flow diagram illustrating using a metric to enable comparison of models when only Weibull data is available, in accordance with one aspect.

### DETAILED DESCRIPTION

Although this disclosure will be described in terms of specific aspects, it will be readily apparent to those skilled in this art that various modifications, rearrangements, and substitutions may be made without departing from the spirit of this disclosure.

For the purpose of promoting an understanding of the principles of this disclosure, reference will now be made to exemplary aspects illustrated in the drawings, and specific language will be used to describe the same. It will nevertheless be understood that no limitation of the scope of this disclosure is thereby intended. Any alterations and further modifications of the features illustrated herein, and any additional applications of the principles of this disclosure, as illustrated herein, which would occur to one skilled in the relevant art and having possession of this disclosure, are to be considered within the scope of this disclosure.

One system that may be used with the exemplary aspects is an engine tracking database system (ETDS). This system serves as the official record of time, cycles, configuration, and maintenance history of a given engine. It is provided to a customer who then maintains the currency of the ETDS through periodic updates of records. This system would feed data of configuration, time, and cycles on individual components to the main analytics core system.

Another metric is the TAC/EFH ratio, which is used to help determine mission length and severity. The numerator, TAC, is the total accumulated cycles, which is a measure of full and partial transients over the life of an engine. The denominator, EFH, is the engine flight hours over the life of the engine. An engine that accumulates many cycles for a fixed amount of flight time often has a net lower exposure to extended high-power operation, which in turn drives low flight severity and lower accumulated distress in the engine flow path. Conversely, a low TAC/EFH ratio is generally correlated with an operator that is using engines in a manner consistent with accumulating significantly more hot time and distress on components. Therefore, the use of this ratio may be useful in determining severity factors for Weibull distribution shifts, sub-fleeting an operator, and appropriately aging installed hardware within a given work-scoping tool. The inverse of TAC/EFH is the flight leg on the commercial engines and is one factor that influences severity. In aspects, other parameters such as TKOFF de-rate, climb de-rate, and ambient temperature may also be used to understand severity. These parameters are typically used today in an average sense, and the disclosed system 100 provides the framework to leverage these parameters in a flight-by-flight context.

One indicator that may be used with the exemplary aspects is the engine serial number (ESN). Each engine has a unique serial number that may be used to personalize individual assets and index their configuration and usage history records. The operational and/or environmental factors described above may be computed on an ESN basis. Other engine identifiers may also be used without departing from the scope of the present disclosure.

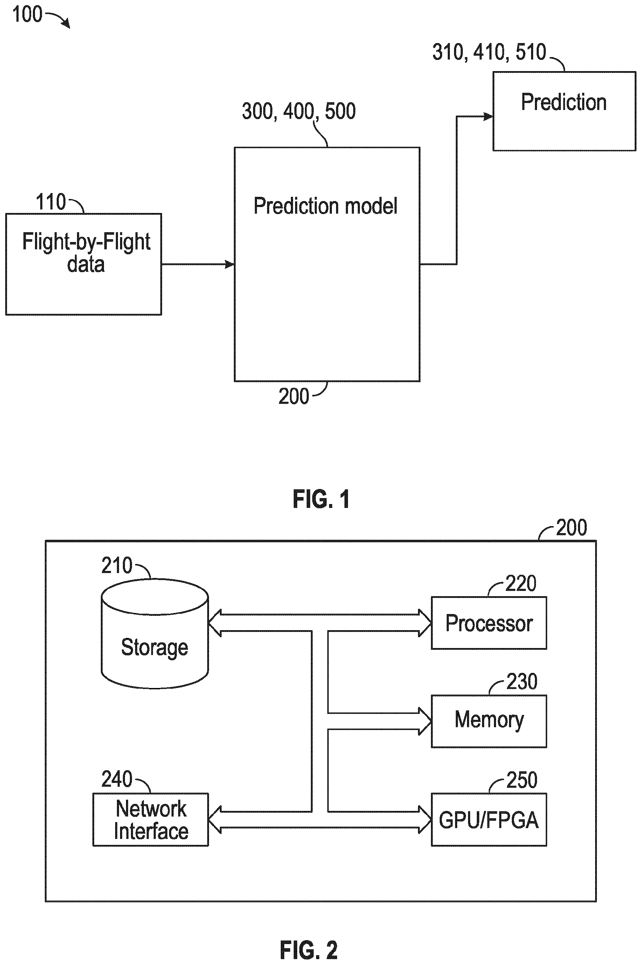

FIG. 1 illustrates an exemplary system 100 for flight-by-flight severity prediction for aircraft components according to an aspect. The system 100 generally includes a controller 200 configured to execute a prediction model 300, 400, 500. The prediction model 300, 400, and 500 is configured to provide information predictive of a component's failure and/or need for replacement and/or maintenance. For example, and not by limitation, the component may be an engine, such as an aircraft jet engine. The system 100 applies weighting functions to each flight. For example, depending on the actual values of variables for a given flight (operations and environmental parameters), the flight may be expressed as damaging cycle equivalents. The system 100 is configured to take into consideration non-linear deterioration phenomena in engine durability models (including, e.g., interactions between variables). The system 100 combines physics formulations with data-based models (where physics is not known explicitly) and develops tunable parameters across data-based factors and physics-based factors together in one shot.

With increased fleet and utilization, the need to predict engine component severity and forecast removal is useful for better fleet planning.

The system 100 provides the benefits of providing a more accurate and precise forecast at the engine and customer level, higher modeling fidelity and flexibility than commercial software, provide more accurate and precise shop visit forecasts, and may provide insights for engineering such as enabling the evaluation of the strength of the impact of various variables, which can suggest improvements in component design.

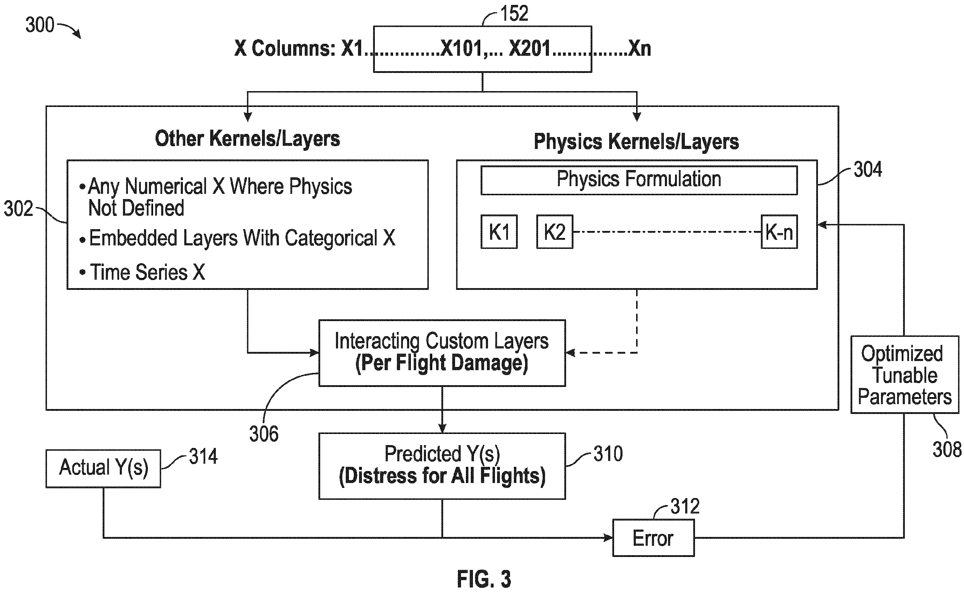

The prediction model 300, 400, 500 may receive as input data including, for example, raw time series flight-by-flight data 110, Weibull data (FIG. 3), RD (e.g., remote diagnostics) data from individual flights, and/or data in model form. The system 100 can use data in model form to enable the incorporation of nonlinearity effects of various factors (Xs) on the flight-by-flight deterioration (e.g., engine deterioration). This enables modeling the interaction between various Xs (e.g., exhaust gas temperature (EGT) and hours of operation) and the ability to define new Xs from existing snapshot data. The system 100 is configured to fetch and ingest a wide variety of input data. For example, the input data may include fleet data and single-engine data; the latter may include single-engine performance data and single-engine configuration data. Once ingested, the single-engine data and the fleet data may be analyzed utilizing application-specific instructions located in controller 200. The system 100 is configured to provide prognostic analytic information relating to a single engine. This information may be outputted by the system 100 as the recommendations.

In one aspect, the flight-by-flight data may include statistical parameters pertaining to a fleet of engines like the single-engine, whose single-engine data is provided to the individual component system 100. For example, the data may include Weibull distributions pertaining to the reliability of the fleet of engines. The fleet data may include performance data and configuration data pertaining to a plurality of engines. Performance data herein, for the single-engine or for the fleet of engines, may include, without limitation, cycle data, hours of operation, and operating temperature. Furthermore, configuration data, without limitation, may include any other configuration parameters associated with an engine. The time series flight-by-flight data may further include engine-specific data from the fleet, on-wing and shop inspection data, engine time on wing data, component scrap rate data, engine deterioration data, engine build configuration, utilization history, and/or an allowable fallout risk.

In aspects, the system 100 may provide a web-based application that can be used to develop custom severity ratios for various engine lines and components, allowing users to specify the model form and Xs and to apply developed models to new data.

The prediction model 300, 400, 500 is able to generate model parameters, flight-by-flight severity ratios for the output model of interest ratios, flight-by-flight adjusted Weibull distribution, and accuracy assessment based on the prediction model's 300, 400, 500 processing of the flight-by-flight data 110. The system 100 may provide accuracy assessment by benchmarking model performance using a receiver operating characteristic (ROC) curve to assess model quality in cross-validation and for benchmarking with other models.

The system 100 provides the benefit of providing a model overfitting guard in the form of a built-in cross-validation functionality, preventing users from developing models that do not generalize well to new data.

The system 100 generally includes a physics-inspired neural network that can be configured as a distress progression model, an engine-specific TOW model, a component scrap rate model, and/or an engine deterioration model. The output of the physics-inspired neural network may be used for maintenance decisions, including engine removal planning, airline shop visit planning, airline maintenance cost, and/or water wash planning.

The system 100 may be used for severity applications and demonstrated on distress progression models using distress ranks, failure time models, and/or performance deterioration models. The framework can also be extended to scrap rate and for applications where the distress is characterized by the output of image analytic features. In aspects, the system 100 may also be used to make optimal wash interval recommendations (e.g., wash is the maintenance decision enabled) for an ESN/customer using the performance deterioration model.

Referring now to FIG. 2, exemplary components in the controller 200 in accordance with aspects of the present disclosure include, for example, a database 210, one or more processors 220, at least one memory 230, and a network interface 240. In aspects, the controller 200 may include a graphical processing unit (GPU) 250, which may be used for processing machine learning network models.

Database 210 can be located in storage. The term "storage" may refer to any device or material from which information may be capable of being accessed, reproduced, and/or held in an electromagnetic or optical form for access by a computer processor. Storage may be, for example, volatile memory such as RAM, non-volatile memory, which permanently holds digital data until purposely erased, such as flash memory, magnetic devices such as hard disk drives, and optical media such as a CD, DVD, Blu-ray Disc^{™}, or the like.

In various aspects, data may be stored on controller 200, including, for example, user preferences, historical data, and/or other data. The data can be stored in database 210 and sent via the system bus to processor 220.

As will be described in more detail later herein, processor 220 executes various processes based on instructions that can be stored in the memory 230 and utilizing the data from database 210. With reference also to FIG. 1, a request from a user device, such as a mobile device or a client computer, can be communicated to the server through the server's network interface 240. The illustration of FIG. 2 is exemplary, and persons skilled in the art will be understood by other components that may exist in a controller 200. Such other components are not illustrated in FIG. 2 for clarity of illustration.

Referring to FIG. 3, a prediction model 300 for a flight-by-flight severity model for estimating component distress based on progressive states of distress is shown. This aspect deals with situations where there is information collected about distress of the component from discrete and/or progressive bore-scope images. The controller 200 causes the system 100 to access time series flight-by-flight data 152 relating to a component of an aircraft. The flight-by-flight data 152 may include performance data. For example, flight-by-flight data 152 may include engine-specific data from the fleet, on-wing and shop inspection data, engine time on wing data, component scrap rate data, and/or engine deterioration data. In another example, the flight-by-flight data 152 may include flight-by-flight time at temperature and/or other environmental factors.

The controller 200 may cause the system 100 to determine an estimated degree of distress for the component by providing the time series flight-by-flight data as input to a prediction model 300.

The prediction model 300 is configured to output the estimated degree of distress. The prediction model 300 is a physics-inspired neural network configured to inform maintenance decisions. The prediction model 300 may include a machine learning model 302 and a physics-based model 304. The prediction model 300 may include multiple physics-based model 304 (e.g., physics kernels) that can be combined along with the output of the machine learning model 302 where physics is not known explicitly. The prediction model 300 is configured to learn per-flight damage by minimizing the loss function 312 (e.g., mean square error (MSE)) between a predicted Y(s) 310 and an actual Y(s) 314 (e.g., distress level). The prediction model 300 may generate tunable parameters 308 based on minimizing the loss function, which can be optimized together in one shot. The tunable parameters 308 may be used to adjust the performance of the physics-based model 304. The prediction model 300 may include interacting custom layers 306 that are configured to estimate a degree of per-flight damage of the component.

The controller 200 may cause the system 100 to determine a flight-by-flight severity prediction for the component based on the estimated degree of distress.

In aspects, the controller 200 may cause the system 100 to determine a scrap rate based on the flight-by-flight severity prediction for the component.

In aspects, the controller 200 may cause the system 100 to provide a preemptive recommendation for the component based on the determined flight-by-flight severity prediction. For example, the preemptive recommendation may include indicating whether a group of engines may successfully complete a deployment of a specified duration. In aspects, the system 100 may cause the removal of the component based on the preemptive recommendation.

In aspects, the controller 200 may cause the system 100 to predict more than one outcome in one shot (e.g., continuous distress, categorical distress, and/or binary removal decision). In aspects, the controller 200 may cause the system 100 to predict the continuous features of distress, for example, TBC spall area, oxidation area, and/or crack length.

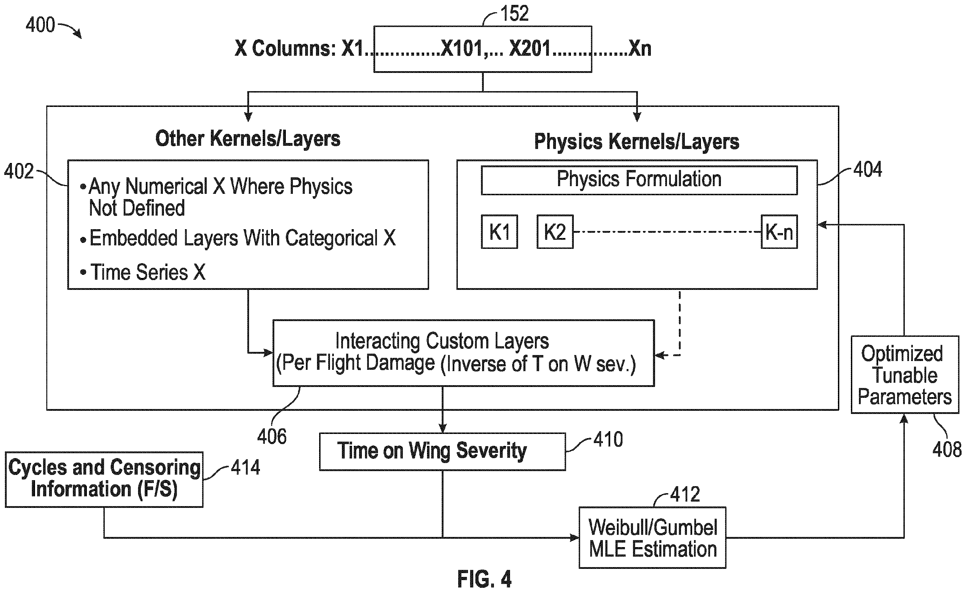

FIG. 4 is a block diagram of a prediction model 400 for estimating flight-by-flight severity based on removal data (e.g., Weibulls). The features of 400 are similar to the features of 300 and will be described in detail where they are different.

The controller 200 may cause the system 100 to determine an estimated degree of distress for the component by providing the time series flight-by-flight data as input to a prediction model 400.

The prediction model 400 is configured to output the estimated degree of distress. The prediction model 400 is a physics-inspired neural network configured to inform maintenance decisions. The prediction model 400 may include a machine learning model 402 and a physics-based model 404. The prediction model 400 may include multiple physics-based model 404 (e.g., physics kernels) that can be combined along with the output of the machine learning model 402 where physics is not known explicitly. The prediction model 400 may include interacting custom layers 406 that are configured for estimating a degree of per-flight damage of the component.

The prediction model 400 is configured to learn per-flight damage (inverse of Time on Wing Severity) by minimizing the loss function, e.g., the maximum likelihood estimation (MLE) for Weibull data and/or Gumbel data. Gumbel data is generated as the result of Gumbel distribution. Gumbel distribution is a distribution of extreme values, For example, the distribution of peak-to-peak values for a parameter.

The prediction model 400 is configured to learn per-flight damage by minimizing the loss function 412 (e.g., MSE) based on an ESN level severity 410 and the cycles and censoring information (f/s) 414. The flight-by-flight severity values are averaged to compute an ESN level severity. The prediction model 300 may generate tunable parameters 408 based on minimizing the loss function, which can be optimized together in one shot. The tunable parameters 408 may be used to adjust the performance of the physics-based model 404. The prediction model 400 may include interacting custom layers 306 that are configured to estimate a degree of per-flight damage. In aspects, the system 100 may cause the component to be removed and/or replaced in response to the degree of per-flight damage being over a threshold value (e.g., about 60%).

In aspects, the controller 200 may cause the system 100 to determine an engine removal probability (e.g., a Weibull severity prediction) for the component based on the flight-by-flight severity prediction for the component. In aspects, the system 100 may cause the engine to be removed in response to the engine removal probability being over a threshold value (e.g., about 60%).

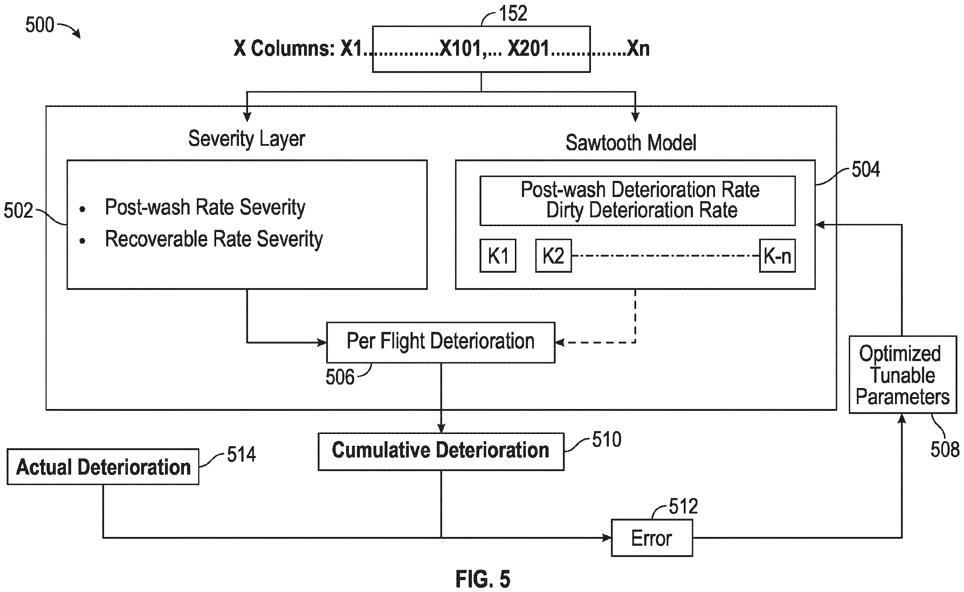

FIG. 5 is a block diagram of a prediction model for estimating component deterioration based on a severity-adjusted sawtooth model. The sawtooth model is used to characterize the deterioration of the engine in the presence of washes at regular intervals. The severity-adjusted sawtooth model accounts for the influence of severity on the characteristics of the sawtooth.

The prediction model 500 is configured to output the estimated degree of performance deterioration of an engine. The prediction model 500 may include a machine learning model 502 and a sawtooth model 504. The machine learning model 502 (e.g., a data-based model) includes a severity layer and is configured to estimate at least one of a post-wash rate severity (e.g., a post-wash deterioration rate) or an inter-wash deterioration rate severity of the engine. The sawtooth model 504 is configured to estimate a post-wash deterioration rate and/or an inter-wash deterioration rate of the engine. The prediction model 500 outputs the estimated degree of engine deterioration. The prediction model 500 is configured to predict a per-flight deterioration severity based on the estimated post-wash deterioration rate or the inter-wash deterioration rate and the estimated post-wash rate severity or the recoverable rate severity. The prediction model 500 may include interacting custom layers 506 that are configured to output the estimated degree of per-flight performance deterioration of the engine.

The prediction model 500 is configured to learn per-flight deterioration severity by minimizing the loss function 512 (e.g., mean square error (MSE)) between a predicted deterioration 510 and an actual deterioration 514. The prediction model 500 may generate tunable parameters 508 based on minimizing the loss function, which can be optimized together in one shot. The tunable parameters 508 may be used to create a severity adjusted sawtooth model 504 of deterioration.

In aspects, the controller 200 may cause the system 100 to determine a degree of performance deterioration for the component based on per-flight deterioration of the engine.

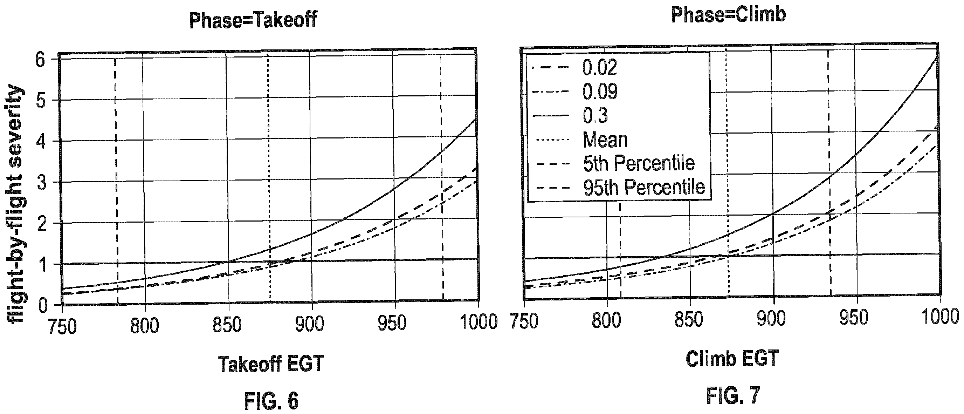

FIGS. 6 and 7 are graphs illustrating takeoff EGT vs. flight-by-flight severity and climb EGT vs. flight-by-flight severity, respectively. The system 100 may model nonlinearity as an exponential function. The interaction between EGT and other Xs may be modeled (depicted in FIGS. 6 and 7 with multiple dotted/dashed lines). Other model forms and interaction forms can be used. The EGT temperature is generally measured by one or more thermocouples mounted in the exhaust stream.

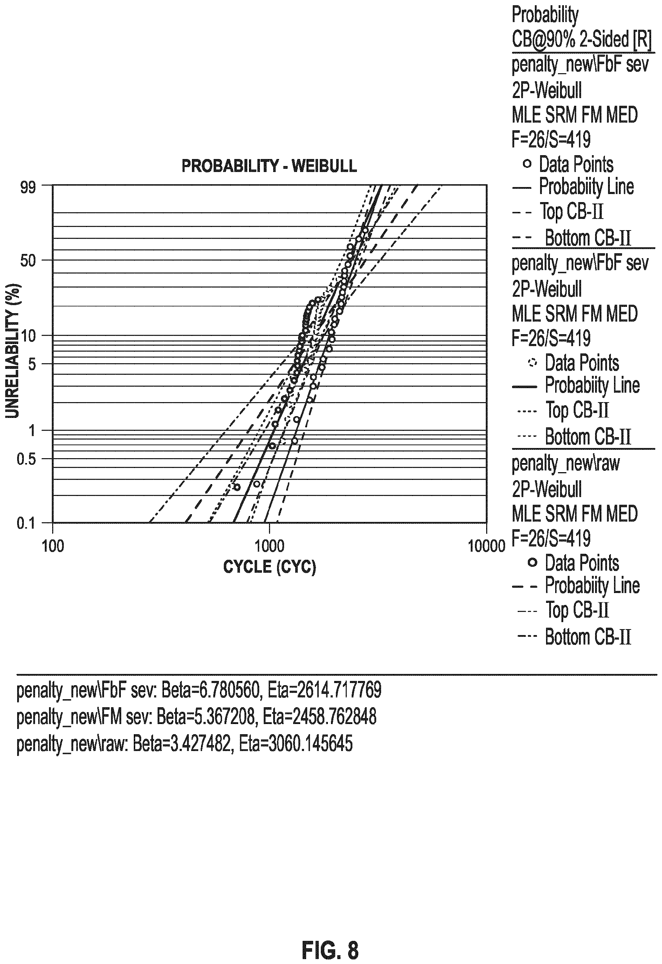

FIG. 8 is a graph illustrating a number of cycles vs. unreliability (%) for flight-by-flight adjusted Weibull distributions. The system 100 may be configured to develop Weibull distributions where cumulated severity cycles are used as time units.

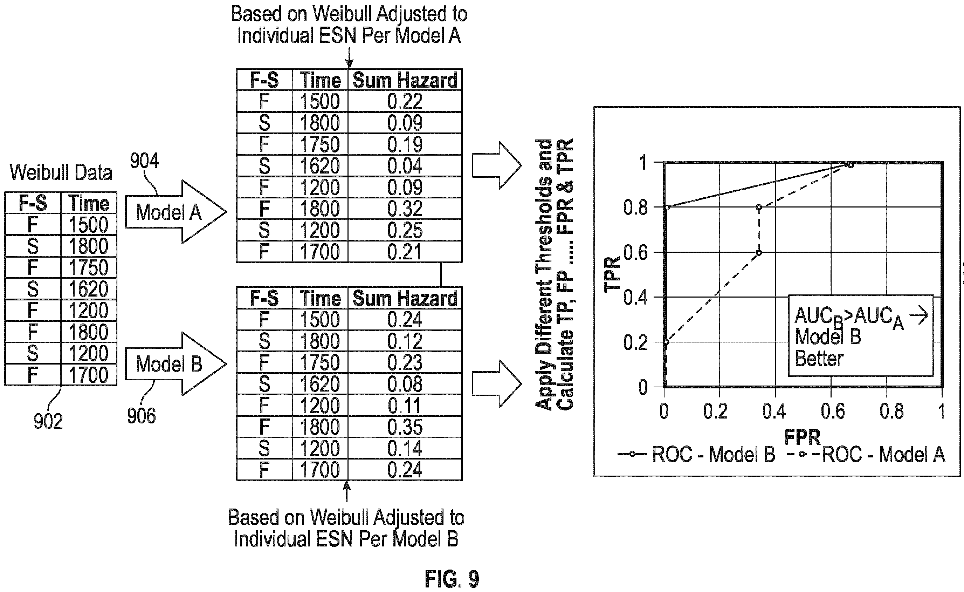

FIG. 9 is a flow diagram illustrating using a metric to enable comparison of models when only Weibull data is available. For example, the Weibull data 902 may be fed into Model A 904 and Model B 906, which may be used to generate a risk score based on Weibull data adjusted to an individual ESN per each respective model. The system 100 may then use the results to develop a metric for measuring flight-by-flight model performance. FIG. 9 illustrates another method to gage the value from the improved model. Note that the other application examples, from FIGS. 4 and 5, also have similar metrics to evaluate the effectiveness of the model.

In some aspects, the flight-by-flight severity estimation may be used as input to the system 100, increasing its short- and mid-term accuracy needed for efficient fleet and MRO network management.

The aspects disclosed herein are examples of the disclosure and may be embodied in various forms. For instance, although certain aspects herein are described as separate aspects, each of the aspects herein may be combined with one or more of the other aspects herein. Specific structural and functional details disclosed herein are not to be interpreted as limiting, but as a basis for the claims and as a representative basis for teaching one skilled in the art to variously employ this disclosure in virtually any appropriately detailed structure.

The phrases "in an aspect," "in aspects," "in various aspects," "in some aspects," or "in other aspects" may each refer to one or more of the same or different aspects in accordance with this disclosure.

Further aspects of the present disclosure are provided by the subject matter of the following paragraphs.

A system for flight-by-flight severity prediction for aircraft components includes a processor; a memory including instructions which, when executed by the processor, cause the system at least to perform: accessing time series flight-by-flight data relating to a component of an aircraft, the time series flight-by-flight data comprising performance data; determining an estimated degree of distress or a performance deterioration for the component by: providing the time series flight-by-flight data as input to a prediction model comprising: a machine learning model; and a physics-based model, wherein the prediction model outputs the estimated degree of distress; determining a flight-by-flight severity prediction for the component based on the estimated degree of distress; and providing a preemptive recommendation for the component based on the determined flight-by-flight severity prediction.

The system according to any preceding paragraph, wherein the instructions, when executed by the processor, further cause the system at least to perform: causing the removal of the component based on the preemptive recommendation.

The system according to the preceding paragraph, wherein the instructions, when executed by the processor, further cause the system at least to perform determining a scrap rate based on the flight-by-flight severity prediction for the component.

The system according to any preceding paragraph, wherein the instructions, when executed by the processor, further cause the system at least to perform determining an engine removal probability for the component based on the flight-by-flight severity prediction for the component.

The system according to any preceding paragraph, wherein the instructions, when executed by the processor, further cause the system at least to perform: performing a maximum likelihood estimation (MLE) for an engine removal probability distribution or minimizing a mean square error (MSE) between a predicted deterioration and an actual deterioration; determining a tunable parameter by minimizing a loss function based on the MLE or the MSE; and determining a per-flight damage of the component based on the tunable parameter.

The system according to any preceding paragraph, wherein the instructions, when executed by the processor, further cause the system at least to perform: causing the engine to be removed in response to the engine removal probability being over a threshold value.

The system according to any preceding paragraph, wherein the time series flight-by-flight data further comprises at least one of statistical data, a Weibull distribution, data generated by probabilistic models, or data generated by trend analytics.

The system according to any preceding paragraph, wherein the time series flight-by-flight data further comprises at least one of engine build configuration, utilization history, or an allowable fallout risk.

The system according to any preceding paragraph, wherein the component is an engine.

The system according to any preceding paragraph, wherein the preemptive recommendation includes indicating whether a group of engines may successfully complete a deployment of specified duration or indicating an optimal wash interval.

The system according to any preceding paragraph, wherein the time series flight-by-flight data further includes a duration of deployment.

The system according to any preceding paragraph, wherein the preemptive recommendation includes at least one of a part demand for a fleet asset or an indication of which asset from a fleet asset is best suited for deployment.

A system for flight-by-flight severity prediction for aircraft components includes: a processor; a memory including instructions which, when executed by the processor, cause the system at least to perform: accessing time series flight-by-flight data relating to a component of an aircraft, the time series flight-by-flight data comprising performance data; determining an estimated degree of distress for the component by: providing the time series flight-by-flight data as input to a prediction model comprising: a sawtooth model configured to estimate at least one of a post wash deterioration rate or an inter-wash deterioration rate of the component; and a machine learning model is configured to estimate at least one of an post-wash rate severity or a inter-wash rate severity of the component, wherein the prediction model outputs the estimated degree of distress; predicting, by the prediction model a per-flight deterioration based on: the estimated at least one of the post wash deterioration rate or the inter-wash deterioration rate; and the estimated at least one of the post-wash rate severity or the inter-wash rate severity; and determining a degree of performance deterioration for the component based on per-flight deterioration of the component.

The system according to the preceding paragraph, wherein the time series flight-by-flight data further comprises at least one of statistical data, a Weibull distribution, data generated by probabilistic models, or data generated by trend analytics.

The system according to any preceding paragraph, wherein the time series flight-by-flight data further comprises at least one of an engine build configuration, a utilization history, or an allowable fallout risk.

The system according to any preceding paragraph, wherein the preemptive recommendation includes indicating whether a group of engines may successfully complete a deployment of specified duration.

The system according to any preceding paragraph, wherein the time series flight-by-flight data further includes a duration of deployment.

The system according to any preceding paragraph, wherein the preemptive recommendation includes at least one of a part demand for a fleet asset or an indication of which asset from a fleet asset is best suited for deployment.

A processor-implemented method for severity prediction for aircraft components includes: accessing time series flight-by-flight data relating to a component of an aircraft, the flight-by-flight data comprising performance data; determining, by a prediction model, an estimated degree of distress for the component based on the time series flight-by-flight data; determining a flight-by-flight severity prediction for the component based on the estimated degree of distress; and providing a preemptive recommendation for the component based on the determined flight-by-flight severity prediction.

The processor-implemented method according to the preceding paragraph, further comprising determining a scrap rate based on the flight-by-flight severity prediction for the component.

The processor-implemented method according to any preceding paragraph, further comprising determining a Weibull severity prediction for the component based on the flight-by-flight severity prediction for the component.

The processor-implemented method according to any preceding paragraph, further comprising: performing a maximum likelihood estimation (MLE) for at least one of a Gumbel or a Weibull distribution; determining a tunable parameter by minimizing a loss function based on the MLE; and determining a per-flight damage of the component based on the tunable parameter.

The processor-implemented method according to any preceding paragraph, further comprising: component to be removed and/or replaced in response to the degree of per-flight damage being over a threshold value.

A processor-implemented method for flight-by-flight severity prediction for aircraft components, the method comprising: accessing time series flight-by-flight data relating to a component of an aircraft, the flight-by-flight data comprising performance data; determining an estimated degree of distress for the component by: providing the time series flight-by-flight data as input to a prediction model comprising: a sawtooth model configured to estimate at least one of a post-wash deterioration rate or an inter-wash deterioration rate of the component; and a machine learning model is configured to estimate at least one of an post-wash rate severity or a recoverable rate severity of the component, wherein the prediction model outputs the estimated degree of distress; predicting, by the prediction model a per-flight deterioration based on: the estimated at least one of the post-wash deterioration rate or the inter-wash deterioration rate; and the estimated at least one of the post-wash rate severity or the recoverable rate severity; and determining a degree of performance deterioration for the component based on per-flight deterioration of the component.

The processor-implemented method according to the preceding paragraph, wherein the time series flight-by-flight data further comprises at least one of statistical data, a Weibull distribution, data generated by probabilistic models, or data generated by trend analytics.

The processor-implemented method according to any preceding paragraph, wherein the time series flight-by-flight data further comprises at least one of an engine build configuration, a utilization history, or an allowable fallout risk.

The processor-implemented method according to any preceding paragraph, wherein the preemptive recommendation includes indicating whether a group of engines may successfully complete a deployment of a specified duration.

The processor-implemented method according to any preceding paragraph, wherein the time series flight-by-flight data further includes a duration of deployment.

The system according to any preceding paragraph, wherein the instructions, when executed by the processor, further cause the system at least to perform determining an engine removal probability prediction for the component based on the flight-by-flight severity prediction for the component.

A system for flight-by-flight severity prediction for aircraft components, the system comprising: a processor; a memory including instructions which, when executed by the processor, cause the system at least to perform: accessing time series flight-by-flight data relating to a component of an aircraft, the time series flight-by-flight data comprising performance data; determining an estimated degree of distress for the component by: providing the time series flight-by-flight data as input to a prediction model comprising: a sawtooth model configured to estimate at least one of a post-wash deterioration rate or an inter-wash deterioration rate of the component; and a machine learning model is configured to estimate at least one of an post-wash rate severity or a recoverable rate severity of the component, wherein the prediction model outputs the estimated degree of distress; predicting, by the prediction model a per-flight deterioration based on: the estimated at least one of the post-wash deterioration rate or the inter-wash deterioration rate; and the estimated at least one of the post-wash rate severity or the recoverable rate severity; and determining a degree of performance deterioration for the component based on the per-flight deterioration of the component.

It should be understood that the description herein is only illustrative of this disclosure. Various alternatives and modifications can be devised by those skilled in the art without departing from the disclosure. Accordingly, this disclosure is intended to embrace all such alternatives, modifications, and variances. The aspects described are presented only to demonstrate certain examples of the disclosure. Other elements, steps, methods, and techniques that are insubstantially different from those described above and/or in the appended claims are also intended to be within the scope of the disclosure.

## Claims

1. A system for flight-by-flight severity prediction for aircraft components, the system comprising:
a processor;
a memory including instructions which, when executed by the processor, cause the system at least to perform:
accessing time series flight-by-flight data relating to a component of an aircraft, the time series flight-by-flight data comprising performance data;
determining an estimated degree of distress or a performance deterioration for the component by:
providing the time series flight-by-flight data as input to a prediction model comprising:
a machine learning model; and
a physics-based model,
wherein the prediction model outputs the estimated degree of distress;
determining a flight-by-flight severity prediction for the component based on the estimated degree of distress; and
providing a preemptive recommendation for the component based on the determined flight-by-flight severity prediction.

2. The system of claim 1, wherein the instructions, when executed by the processor, further cause the system at least to perform:
determining a scrap rate based on the flight-by-flight severity prediction for the component.

3. The system of any preceding claim, wherein the instructions, when executed by the processor, further cause the system at least to perform:
determining an engine removal probability prediction for the component based on the flight-by-flight severity prediction for the component.

4. The system of any preceding claim, wherein the instructions, when executed by the processor, further cause the system at least to perform:
performing a maximum likelihood estimation (MLE) for an engine removal probability distribution or minimizing a mean square error (MSE) between a predicted deterioration and an actual deterioration;
determining a tunable parameter by minimizing a loss function based on the MLE or the MSE; and
determining a per-flight damage of the component based on the tunable parameter.

5. The system of any preceding claim, wherein the component is an engine.

6. The system of any preceding claim, wherein the preemptive recommendation includes indicating whether a group of engines may successfully complete a deployment of a specified duration or indicating an optimal wash interval.

7. A system for flight-by-flight severity prediction for aircraft components, the system comprising:
a processor;
a memory including instructions which, when executed by the processor, cause the system at least to perform:
accessing time series flight-by-flight data relating to a component of an aircraft, the time series flight-by-flight data comprising performance data;
determining an estimated degree of distress for the component by:
providing the time series flight-by-flight data as input to a prediction model comprising:
a sawtooth model configured to estimate at least one of a post-wash deterioration rate or an inter-wash deterioration rate of the component; and
a machine learning model is configured to estimate at least one of an post-wash rate severity or a recoverable rate severity of the component,
wherein the prediction model outputs the estimated degree of distress; predicting, by the prediction model a per-flight deterioration based on:
the estimated at least one of the post-wash deterioration rate or the inter-wash deterioration rate; and
the estimated at least one of the post-wash rate severity or the recoverable rate severity; and
determining a degree of performance deterioration for the component based on the per-flight deterioration of the component.

8. The system of any preceding claim, wherein the time series flight-by-flight data further comprises at least one of statistical data, a Weibull distribution, data generated by probabilistic models, or data generated by trend analytics.

9. The system of any preceding claim, wherein the time series flight-by-flight data further comprises at least one of an engine build configuration, a utilization history, or an allowable fallout risk.

10. The system of any preceding claim, wherein the preemptive recommendation includes indicating whether a group of engines may successfully complete a deployment of a specified duration.

11. The system of any preceding claim, wherein the time series flight-by-flight data further includes a duration of deployment.

12. The system of any preceding claim, wherein the preemptive recommendation includes at least one of a part demand for a fleet asset or an indication of which asset from the fleet asset is best suited for deployment.

13. A processor-implemented method for severity prediction for aircraft components, the method comprising:
accessing time series flight-by-flight data relating to a component of an aircraft, the time series flight-by-flight data comprising performance data;
determining, by a prediction model, an estimated degree of distress for the component based on the time series flight-by-flight data;
determining a flight-by-flight severity prediction for the component based on the estimated degree of distress; and
providing a preemptive recommendation for the component based on the determined flight-by-flight severity prediction.

14. The processor-implemented method of claim 13, further comprising:
(a) determining a scrap rate based on the flight-by-flight severity prediction for the component, and/or
(b) determining a Weibull severity prediction for the component based on the flight-by-flight severity prediction for the component.

15. The processor-implemented method of any one of claims 13-14, further comprising:
performing a maximum likelihood estimation (MLE) for at least one of a Gumbel or a Weibull distribution;
determining a tunable parameter by minimizing a loss function based on the MLE; and
determining a per-flight damage of the component based on the tunable parameter.
